Europäisches Patentamt

European Patent Office

Office européen des brevets

(11) Publication number: **0 499 211 A2**

# EUROPEAN PATENT APPLICATION

(21) Application number: **92102273.7**

(22) Date of filing: **11.02.92**

(51) Int. Cl.5: **G05B 19/04**

(30) Priority: **15.02.91 JP 44279/91**

(43) Date of publication of application:
**19.08.92 Bulletin 92/34**

(84) Designated Contracting States:
**DE FR GB**

(71) Applicant: **MINOLTA CAMERA KABUSHIKI KAISHA**
**Osaka Kokusai Building 3-13, 2-chome,**
**Azuchi-Machi Chuo-ku**
**Osaka-shi Osaka 541(JP)**

(72) Inventor: **Okatani, Toru, c/o MINOLTA**

**CAMERA K.K.**
**Osaka Kokusai Bldg, 3-13, 2-Chome,**
**Azuchi-Machi**
**Chuo-Ku, Osaka-Shi, Osaka 541(JP)**
Inventor: **Ito, Masazumi, c/o MINOLTA**
**CAMERA K.K.**
**Osaka Kokusai Bldg, 3-13, 2-Chome,**
**Azuchi-Machi**
**Chuo-Ku, Osaka-Shi, Osaka 541(JP)**

(74) Representative: **Glawe, Delfs, Moll & Partner**
**Patentanwälte**
**Postfach 26 01 62 Liebherrstrasse 20**
**W-8000 München 26(DE)**

(54) **Message display device.**

(57) In a message display system of displaying a message in a language selected from a plurality of languages on a display (23) provided in the main body (10) of an apparatus, the main body (10) of the apparatus is provided with a first memory (12) that stores message information D1 corresponding to each of the plurality of languages. An attachment member (11) detachable from the main body (10) of the apparatus includes an information holding device (110) for storing language specify information D2 indicating a language to be selected. When the attachment member (11) is inserted into the main body (10) of the apparatus, the main body (10) reads out language specify information D2 from the information holding device (110), whereby message information D1 corresponding to the language of the language specify information D2 is selectively read out from the first memory medium (12) to have a message displayed.

FIG.1

## BACKGROUND OF THE INVENTION

Field of the Invention

The present invention relates to message display devices, and more particularly, to a message display device that can display a message for the operation and maintenance of an apparatus in a language selected from a plurality of languages.

Description of Related Art

Many multifeature OA apparatuses are provided with display devices such as liquid crystal displays that can display arbitrary characters on the operation panel with operation keys. The display device indicates various messages such as the feature selection branch of the OA equipment and the operation state.

In exporting such apparatus to various foreign countries where the local languages used (for example, an official language) differ, it is necessary to display the message in a language that can be easily comprehended by the local user or the serviceman (referred to as "operator" hereinafter) for facilitating easier operation and maintenance administration.

A copying apparatus that can select the language displayed as a message from a plurality of languages is disclosed in Japanese Patent Laying-open No. 58-199388, for example.

According to this publication, a conventional copying apparatus has a cassette mounted to the main body of the copying apparatus in a detachable manner, incorporating a storage medium (memory) in which message information is stored. Such a cassette is prepared for each of the plurality of languages, whereby a cassette corresponding to a desired language is mounted to the main body of the copying apparatus in selecting the language for the message. The selection of a language for the message was carried out by exchanging the memory storing the message information.

Thus, the specification of the copying apparatus could easily be made to conform to the specification corresponding to the export destination.

In conventional cases, the message information itself, i.e. data corresponding to a plurality of characters forming sentences and words, was stored in the memory of the cassette which was detachable from the main body of the apparatus. A memory of great storage capacity was required for the cassette, resulting in the difficulty of having a light and compact cassette (for example, a card-like module). There was also the problems of unreliable transmission and unacceptable speed due to the fact that there was a heavy load of data to be transferred from the memory to the main body of the apparatus.

## SUMMARY OF THE INVENTION

Therefore, an object of the present invention is to display a message in a desired language with a storage medium of small capacity in a message display device.

Another object of the present invention is to improve reliability of data transmission in a message display device that can display a message in a desired language.

A further object of the present invention is to increase the display rate of a message display device that can display a message in a desired language.

Still another object of the present invention is to display a message in a desired language with a storage medium of small capacity in the method of displaying a message.

A still further object of the present invention is to select a desired language using a storage medium of small capacity in a message display system that can display a message in a language selected from a plurality of languages.

The above objects of the present invention can be achieved by a message display device including the following elements. A device including a display function for displaying a message in a language selected from a plurality of languages includes a display device for displaying a message, and a first memory storing a message corresponding to a plurality of languages. The device includes a detachable attachment member having a second memory that can store selection information indicating a specific language. The main body of the device further includes a receiver for receiving selection information indicating a desired language from the attachment member, and a selector for selecting a message that is to be displayed on the display device from a plurality of messages stored in the first memory according to the selection information received by the receiver.

The message display device displays a message stored in the first memory provided in the main body according to the selection information from the attachment member that is detachable from the main body of the device. It is required that the attachment member stores only the selection information. Therefore, a message can be displayed in a desired language by a storage medium of small capacity in the message display device.

According to another aspect of the present invention, the method of selecting a display language in a device that can display a message on the display panel of the main body of the device in a language selected from a plurality of languages stored in the main body of the device includes the steps of mounting to the main body of the device an attachment member that can store selection information indicating a specific language, receiving in the main body of the device the selection information from the attachment member, and selecting as the message display language a language according to the received selection information.

With the method of selecting a display language, a message is displayed in a language that is selected according to the selection information received from the mounted attachment member. As a result, according to the method of displaying a message, a message in a desired language can be displayed using a storage medium of small capacity.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a block diagram showing the structure of a control portion of an off line editor according to the present invention.

Fig. 2 is a perspective view showing the appearance of an off line editor.

Fig. 3 is a diagram showing a structure of a memory region of a memory card.

Fig. 4 is a diagram showing a structure of a memory region of a font ROM.

Fig. 5 is a flow chart schematically showing the operation of a CPU.

Fig. 6 is a flow chart schematically showing the operation of a CPU.

Fig. 7 is a diagram showing an example of a language selection screen in Japanese.

Fig. 8 is a diagram showing an example of a language selection screen in English.

Fig. 9 is a perspective view showing an appearance of a copying apparatus according to another embodiment of the present invention.

Fig. 10 is a plan view showing a structure of a magnetic card.

DESCRIPTION OF THE PREFERRED EMBODIMENTS

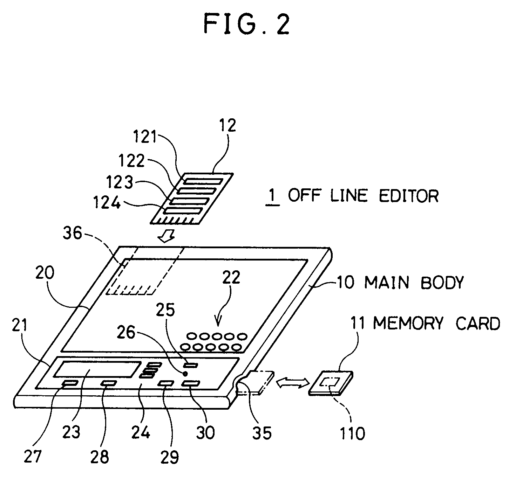

Referring to Fig. 2, an off-line editor 1 is a device (a peripheral equipment of the copying apparatus) for utilizing the editorial copy function of a copying apparatus not shown. Off-line editor 1 is implemented with a main body 10 and a memory card 10 called an edit card. Copy requirements such as the number of copies and the magnification, and operation of various features other than the editorial copying feature provided in the copying apparatus can be specified with off-line editor 1.

Memory card 11 is detachable from main body 10. Memory card 11 is electrically connected with main body 10 by being inserted into a card inlet 35 provided at the side of main body 10 in the proximity of the front side. The exchange of data between off-line editor 1 and the copying apparatus is carried out by means of memory card 11.

Memory card 11 incorporates a memory IC 110, allowing the storage of various control data and edit data, as well as language specifying information D2 for specifying the language of a message. In many cases, a plurality of memory cards 11 are provided as the attachment member for one main body 10, so that a plurality of operators can share one off-line editor 1, with each operator carrying his own memory card 11.

A tablet 20 for specifying an edit region, and an operation panel 21 are provided at the top face of main body 10. Tablet 20 has an area corresponding to the size of the original document, with ten keys 22 corresponding to the numbers of 0-9 provided at the corner. A liquid crystal display (LCD) 23 that can display an arbitrary character, and various operation keys are provided in operation panel 21.

The operations keys on operation panel 21 include a select key 24 for selecting a feature of the copying apparatus, a clear key 25 for clearing numeric values entered by ten keys 22, a reset key 26 for setting off-line editor 1 to the initial state, an up key 27 and a down key 28 for setting details of the operation mode, an enter key 29 for executing the storage of the set data, and a back key 30 for returning the display screen of LCD 23 to a preceding screen.

A connector portion 36 is provided at the bottom face of main body 10 for mounting a ROM card 12 in a detachable manner. ROM card 12 incorporates four font ROMs 121-124. Display data (message information) D121-D124 corresponding to a message (a sentence or word indicating an operation procedure or an operation state to be displayed on LCD 23) in each different language are previously stored in each of font ROMs 121-124. The memory capacity of each of font ROMs 121-124 is 16 kilobytes.

A ROM card 12 adaptable to the exported destination of off-line editor 1 is mounted in connector portion 36. For example, if the specification of off-line editor 1 is for European countries, a ROM card 12 storing message information D1 in English, German, French and Spanish is mounted. In the case of a specification for Asian countries, a ROM card 12 storing message information D1 in Chinese, Korean, Japanese, and English is mounted.

It is assumed that a ROM card 12 having message information D1 in Japanese, English, German, and French stored in font ROMs 121, 122, 123, and 124, respectively, is mounted in the following description. In the drawings, elements corresponding to Japanese and elements corresponding to English have the characters of "j" and "e" denoted, respectively, for distinction.

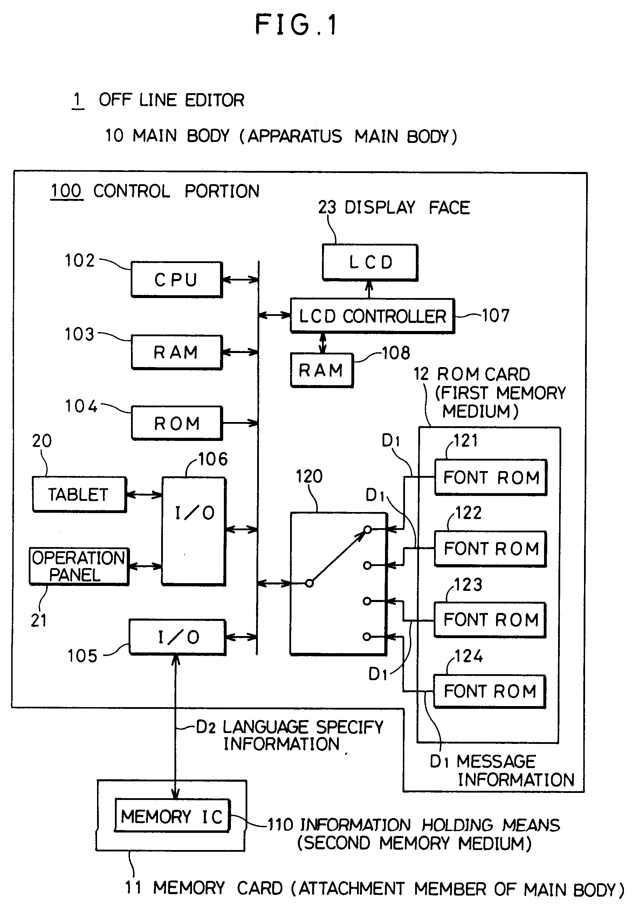

Fig. 1 is a block diagram showing a structure of control portion 100 of off-line editor 1 shown in Fig. 2.

Control portion 100 is implemented with a CPU (Central Processing Unit) 102 for controlling the entirety of off-line editor 1, a RAM 103 for temporarily storing control data, a ROM 104 for storing system program, input/output interfaces 105 and 106, an LCD controller 107, a ROM 108 for display, and a selector 120 for alternatively selecting font ROMs 121-124.

The operation of control portion 100 specific to the present invention will be described briefly hereinafter.

CPU 102 reads out language specify information D2 from memory IC110 to alternatively select font ROMs 121-124 corresponding to one language specified by language specify information D2. The actual selection of font ROMs 121-124 is carried out by sending a chip select signal via selector 120 to turn active one of the font ROMs where address specification and data readout are allowed.

Each of font ROMs 121-124 is assigned with an identical address in the address specification by CPU 102. CPU 102 does not distinguish each of font ROMs 121-124 to specify a predetermined address according to a key operation on operation panel 21 for reading out message information D1 (strictly speaking, a portion of message information D1) from one active font ROM 121-224.

The readout message information D1 is transferred to display RAM 108. LCD 23 is controlled by LCD controller 107, whereby a message in a specific language according to message information D1 is displayed on the screen of LCD 23.

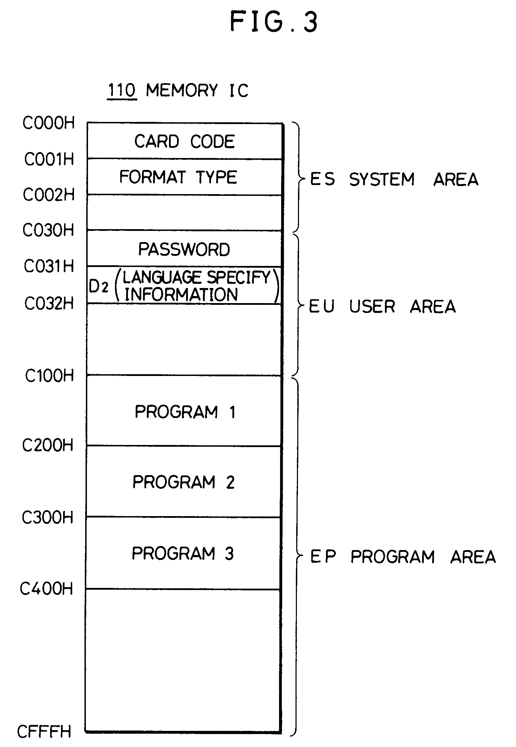

Fig. 3 shows the structure of the memory region of memory card 11.

The memory region of memory IC110 is divided into three regions of a system area ES, a user area EU, and a program area EP, with addresses C000H-CFFFH assigned by CPU 102.

System area ES stores data of the memory capacity (8 kilobytes) of memory card 11, form, and format types. User area EU stores data such as the password and language specify information D2 inherent to each operator. Program area EP stores data for editorial copy specified from tablet 20 and operation panel 21.

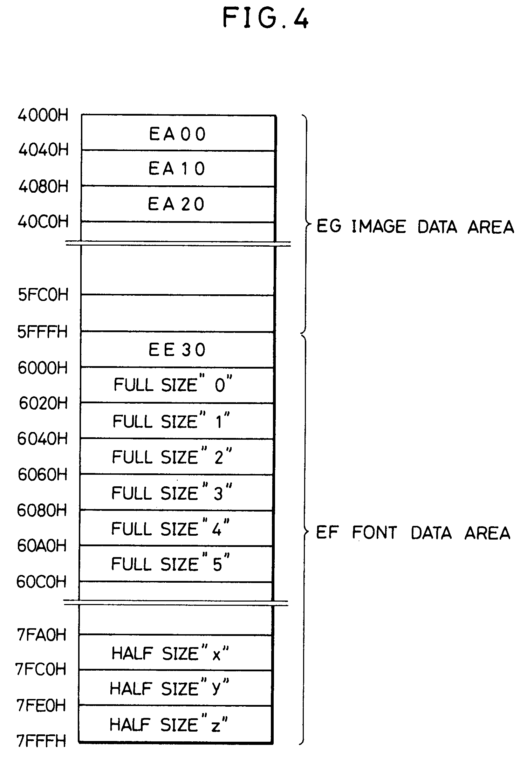

Fig. 4 shows the structure of the memory region of a font ROM.

As mentioned above, each of font ROMs 121-124 is assigned with the same address (4000H-8000H) in the address specification by CPU 102. The memory region of each of font ROMs 121-124 is divided into two regions of a screen data area EG and a font data area EF.

Screen data area EG is assigned with memory regions EA00-EE30 of 64 bytes for each screen on LCD 23 which has the display changed according to the operation state. Each of memory regions EA00-EE30 has the font codes of all the characters forming a message and graphic data in each screen stored.

A memory region of 32 bytes is assigned for one character (full size and half size numerals and alphabets) in font data area EF. Each character is stored in the form of dot pattern data.

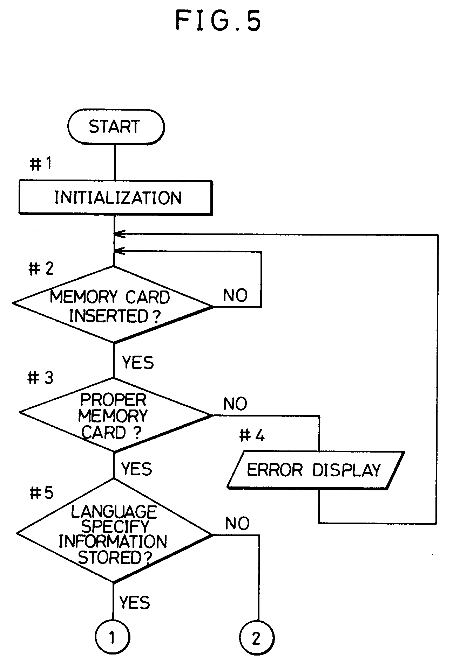

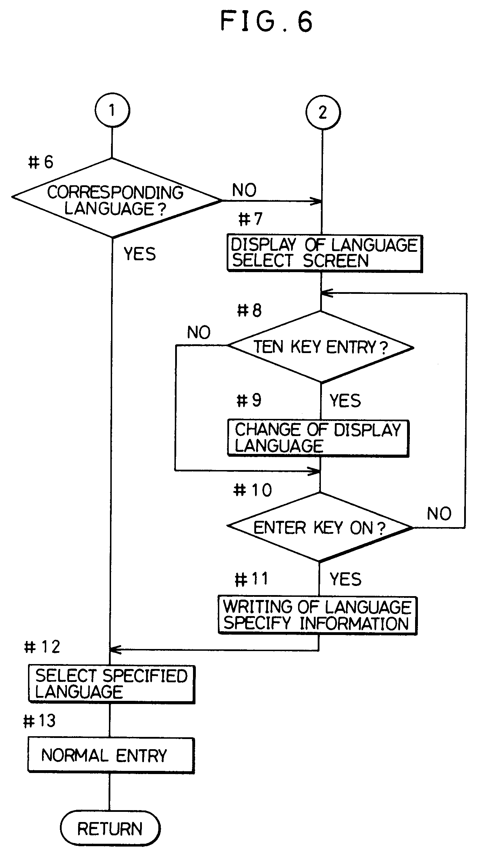

Figs. 5 and 6 are flow charts schematically showing the operation of CPU 102.

Upon the apply of the power source, initialization for each portion is carried out (step #1). CPU 102 takes a standby state until memory card 11 is inserted into card inlet 35 (step #2). The insertion of memory card 11 commences verification of whether memory card 11 is a proper card suitable for off-line editor 1 according to data in system area ES of memory IC 110 (step #3). If not adaptable, as in the case where a card corresponding to a type of device different from that of off-line editor 1 is inserted, an error display is carried out by LCD 23 (step #4).

If a proper memory card 11 is inserted, verification is made whether language specify information D2 is stored therein (step #5). If the memory card 11 is not yet used at all, i.e. if memory card 11 is just shipped from the factory, language specify information D2 is not stored. The language specified by memory card 11 can be selected appropriately from the user side. Thus, the versatility of memory card 11 is enhanced.

If the inserted memory card 11 is used for the first time after shipment from the factory, CPU 102 displays a screen for selecting the language of the message on LCD 23 (Fig. 6, step #7).

More specifically, at step #7, font ROM 121 is selected to read out message information D1j from memory region EA10 of screen data area EG (refer to Fig. 4) to display a language select screen G1j in Japanese on LCD 23.

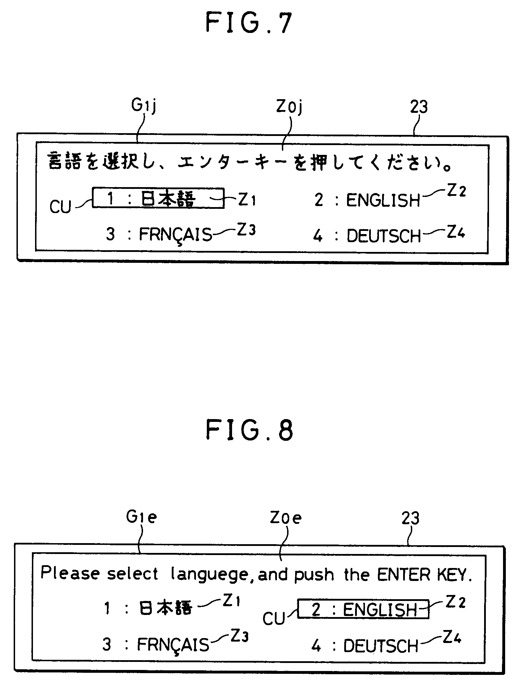

Fig. 7 shows an example of a language select screen G1j in Japanese.

Language select screen G1j includes a message sentence ZOj, and four languages Z1-Z4 as the selection branch corresponding to the respective selection branch numbers of 1-4. In language select screen G1j, message sentence ZOj prompting the selection of a language is represented in Japanese, but each of languages Z1-Z4 of Japanese, English, French, and German are represented in their corresponding language. For the purpose of indicating that the current language as the selection candidate is Japanese, language Z1 of selection branch number "1" is enclosed by a frame line CU.

When Japanese is to be selected for the language of the message, the operator depresses enter key 29 on operation panel 21 (refer to Fig. 2), whereby all the messages thereafter will be displayed in Japanese on LCD 23. If a language other than Japanese is to be specified, the operator depresses a numeric key corresponding to the desired selection branch number from ten keys 22 of tablet 20.

Referring to Fig. 6 again, CPU 102 makes a check whether there is a depression of ten keys 22 at step #8. If a ten key 22 is depressed, the language on the screen of LCD 23 is changed (step #9). For example, if the operator depresses numeric key "2" to specify English, font ROM 122 is selected instead of font ROM 121. Similarly to step #7, message information D1e is read out from memory region EA10 of screen data area EG, whereby language select screen G1e is displayed in English.

Fig. 8 shows an example of a English language select screen G1e.

In language select screen G1e, message sentence ZOe of a meaning identical to that of message sentence ZOj of Fig. 6 is displayed in English. Language Z2 of selection branch number "2" is enclosed by frame line CU in order to indicate that the current language as the selection candidate is English. The four languages Z1-Z4 as the selection branch are respectively displayed in the corresponding language, as in language select screen G1j.

Referring to Fig. 6 again, a check is made whether enter key 29 is depressed at step #9. If there is no depression of enter key 29, control returns to step #8, otherwise to step #11.

At step #11, language specify information D2 indicating a language specified by the operator (one of the four mentioned languages in the present embodiment) is written into memory IC110 of memory card 11 via interface 105. Thus, a language corresponding to language specify information D2 will be automatically selected as the language for the message when the operator uses memory card 11 the next time.

Next, the process for storing predetermined data into RAM 103 is carried out inside main body 10 as the process for selecting the specified language as the language for displaying the message (step #12).

If memory card 11 already having language specify information D2 stored is inserted, a check is made whether the language specified by language specify information D2 is one of the four languages actually included in ROM card 12 (step #6). There may be some cases where the language specified by memory card 11 and the stored language in ROM card 12 do not correspond, such as in the case where the ROM card is exchanged to another ROM card 12 having a different specification for languages, after the previous usage of memory card 11.

If the result is YES at step #6, step #12 is executed, otherwise, control proceeds to the above-described step #7.

Then, the normal entry process for operating keys to set editorial copy and copy requirements is carried out (step #13). The processes of steps #2-#13 are repeated at a constant cycle during the time period when the power is on.

At step #13, an usage confirmation screen for prompting the entry of a password in the predetermined language is first displayed for making confirmation whether the operator is allowed to use that memory card 11, when a password is registered in memory card 11. If a password is not registered, a feature select screen in the predetermined language is displayed as the initial screen for operation. The operator carries out an operation such as selecting a selection branch, and switching to a succeeding screen by enter key 29, according to a message on a screen.

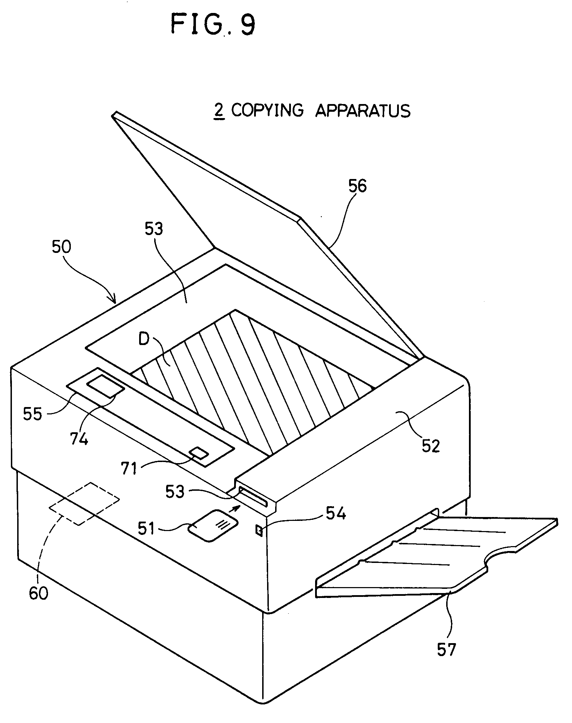

Fig. 9 is a perspective view of the appearance of a copying apparatus 2 according to another embodiment of the present invention.

Copying apparatus 2 comprises a main body 50 and a magnetic tape 51 for recording various data, as will be described later.

Main body 50 is integrated with a user management device 52, having an original bed glass 53 and an operation panel 55 provided on the surface. User management device 52 is provided with a card inlet 53 adjacent to operation panel 55. Magnetic card 51 inserted into card inlet 53 is automatically introduced inside user management device 52, whereby data reading and writing is carried out for magnetic card 51.

The copy procedure commences by setting magnetic card 51 to turn copying apparatus 2 into a copy enable state. Until the proper magnetic card 51 is set, copying apparatus 2 can not actually commence its copy operation even if power is turned on. After an original document D placed on original bed glass 53 is covered by an original cover 56, the operator depresses an operation key (not shown) of operation panel 55 to set the copy conditions.

The depression of print key 71 commences the copying operation, whereby a sheet having a copy image formed thereupon is discharged on a discharge tray 57. After the copy operation is completed, a card discharge key 54 provided below card inlet 53 is depressed. This causes magnetic card 51 to be conveyed from the internal of user management device 52 to card inlet 53 to be unloaded.

Main body 50 is generally supplied with a plurality of magnetic cards 51. The magnetic cards 51 are distributed among the operators for the purpose of administrating the usage of copying apparatus 2. For example, the plurality of magnetic cards are distributed for each operator or for each section where the operator belongs in a business office, according to the usage requirement of the copying apparatus.

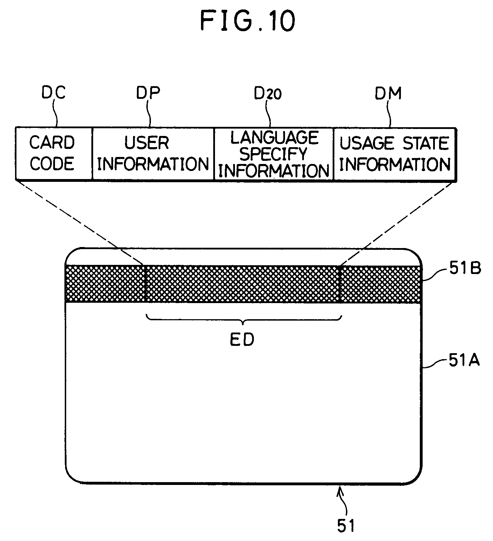

Fig. 10 is a plan view of a structure of magnetic card 51, showing the contents of stored data.

Magnetic card 51 comprises a resin plate 51A and a strip-like magnetic body 51B provided on the surface thereof. Card code DC indicating the type of the card, user information DP for specifying the operator or an user of a section, usage status information DM indicating the accumulated number of copies, and language specify information D20 are recorded in data area ED of magnetic body 51B.

Similar to the case of the aforementioned off-line editor 1, copying apparatus 2 is provided with a detachable non-volatile memory 60 having message information of a plurality of languages stored therein. In operating operation panel 55, a message is displayed on LCD 74 in a language corresponding to language specify information D20. If language specify information D20 is not stored in magnetic card 51, language specify information D20 is recorded into magnetic card 51 via user management device 52 according to language specification by operation panel 55.

According to the above described embodiment, language specify information D2 is not initially stored in memory card 11, and language specify information D2 corresponding to the language specified by the user is automatically stored when memory card 11 is first used. This yields the advantage of lowering the cost by virtue of versatility of memory card 11. Language will not be a problem in purchasing the necessary number of memory cards 11. The selection of language needs to be carried out by the user only at the first time of the usage of memory card 11.

The present invention also has the following advantage when adapted to an international office where people of different countries and languages work, and where a plurality of operators using different languages share one off-line editor 1. Each operator carrying his or her own memory card 11 needs to set only his or her own memory card 11 into the main body to have the message displayed in his or her preferable language. The complex operation of the off-line editor can be carried out promptly without error.

The present invention allows the easy change of language to a corresponding possible language by exchanging ROM card 12. It is not necessary to prepare additional attachment members for the main body for the purpose of selecting the language for the message, since language specify information D2 and D20 are stored in the edit card or the magnetic card 51 used for administrating the usage of copy apparatus 2 and for exchanging data between off-line editor 1 and copying apparatus 2.

The present invention requires only a memory region of several bits for storing language specify information D2 and D20, so that language selection can be carried out with a light and thin memory card 11 or magnetic card 51 that is convenient for being carried by the operator.

According to the above described embodiments, the number of types of languages in ROM card 12 or memory 60 can be an arbitrary number of 2 and above.

Other devices for display may be substituted for LCDs 23 and 24 in the present invention. For example, the message may be displayed by a LED matrix or a plasma display panel.

Although an embodiment of off-line editor 1 and copying apparatus 2 are described in the above embodiments, the present invention may be applied to an arbitrary equipment that displays a message in a sentence or a word. For example, the present invention may be applied to an ATM (Automated Teller Machine) installed in financial institutes, to dispensers, and public telephones, with language specify information D2 stored in a cashing card, a credit card, or a prepaid card.

Although language specify information D2 and D20 were described as being electrically or magnetically written from the main body of the device 10 or 50 into memory card (edit card) 11 or magnetic card 51 in the above embodiments, the language specifying information may be manually specified in the attachment member of the main body. For example, a switch such as a slide switch for manually setting language specify information may be provided in a key counter device that is detachable from the main body of the copying apparatus and that enables copy operation by being inserted into the main body, as well as counting the number of copy operations during the card insertion. In the case where a key counter device is inserted into the main body of the copying apparatus, the position of the switch is mechanically or optically detected at the main body, whereby the language of the message is changed according to the position of the switch. If language specify information is stored in the attachment member of the main body according to the operation from the main body side, a particular switch is not required to be provided in the attachment member of the main body, where the operation of storing language specify information becomes very simple.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A device (1) having a display function that can display a message in a language selected from a plurality of languages, characterized in that:

   messages corresponding to a plurality of languages are stored in said device (1),

   an individual storage medium (11) is detachable from said device (1),

   information indicating a specific language can be stored in said storage medium (11), and

   when said storage medium (11) is loaded in said device (1), said device (1) refers to the information stored in said storage medium (1) to select the language to be displayed.

2. The device according to claim 1, further characterized in that

   information indicating a specific language can be stored in said storage medium (11) by said device (1).

3. The device according to claim 1, further characterized in that

   said messages corresponding to the plurality of languages stored in said device (1) are detachable from said device.

# FIG.1

<u>1</u>  OFF LINE EDITOR

10 MAIN BODY (APPARATUS MAIN BODY)

# FIG. 2

1 OFF LINE EDITOR

10 MAIN BODY

11 MEMORY CARD

# FIG.3

110 MEMORY IC

| | |
|---|---|
| C000H | CARD CODE |
| C001H | FORMAT TYPE |
| C002H | |
| C030H | PASSWORD |
| C031H | D₂ ( LANGUAGE SPECIFY INFORMATION ) |
| C032H | |
| C100H | PROGRAM 1 |
| C200H | PROGRAM 2 |
| C300H | PROGRAM 3 |
| C400H | |
| CFFFH | |

ES SYSTEM AREA

EU USER AREA

EP PROGRAM AREA

# FIG.4

| Address | Content | |
|---|---|---|
| 4000H | EA 0 0 | |
| 4040H | EA 1 0 | |
| 4080H | EA 2 0 | EG IMAGE DATA AREA |
| 40C0H | | |
| 5FC0H | | |
| 5FFFH | | |
| | EE 3 0 | |
| 6000H | FULL SIZE " 0 " | |
| 6020H | FULL SIZE " 1 " | |
| 6040H | FULL SIZE " 2 " | |
| 6060H | FULL SIZE " 3 " | |
| 6080H | FULL SIZE " 4 " | EF FONT DATA AREA |
| 60A0H | FULL SIZE " 5 " | |
| 60C0H | | |
| 7FA0H | HALF SIZE " x " | |
| 7FC0H | HALF SIZE " y " | |
| 7FE0H | HALF SIZE " z " | |
| 7FFFH | | |

# FIG.5

```
                    START

 #1
              INITIALIZATION



 #2
                                    NO
           MEMORY CARD
           INSERTED ?

                 YES
 #3
              PROPER                NO
              MEMORY
              CARD ?
                           #4
                 YES
                                ERROR DISPLAY
 #5
              LANGUAGE
              SPECIFY            NO
           INFORMATION
              STORED?

                 YES

               ( 1 )           ( 2 )
```

# FIG. 6

① ②

#6 CORRESPONDING LANGUAGE? —NO→

#7 DISPLAY OF LANGUAGE SELECT SCREEN

YES

#8 TEN KEY ENTRY?

NO

#9 CHANGE OF DISPLAY LANGUAGE

YES

#10 ENTER KEY ON? —NO

#11 WRITING OF LANGUAGE SPECIFY INFORMATION

YES

#12 SELECT SPECIFIED LANGUAGE

#13 NORMAL ENTRY

RETURN

# FIG.7

G1j          Z0j          23

言語を選択し、エンターキーを押してください。

CU — [ 1 ：日本語 ] — $Z_1$      2 ：ENGLISH — $Z_2$

       3 ：FRNÇAIS — $Z_3$      4 ：DEUTSCH — $Z_4$

# FIG.8

G1e          Z0e          23

Please select languege, and push the ENTER KEY.

     1 ：日本語 — $Z_1$    CU — [ 2 ：ENGLISH ] — $Z_2$

     3 ：FRNÇAIS — $Z_3$      4 ：DEUTSCH — $Z_4$

# FIG. 9

<u>2</u> COPYING APPARATUS

# FIG.10

|  DC  |  DP  |  D20  |  DM  |
|------|------|-------|------|
| CARD CODE | USER INFORMATION | LANGUAGE SPECIFY INFORMATION | USAGE STATE INFORMATION |

ED

51B

51A

51